# EUROPEAN PATENT SPECIFICATION

(11) **EP 3 515 083 B1**
(45) Date of publication and mention of the grant of the patent: **07.06.2023**
(21) Application number: 17825715.0
(22) Date of filing: 28.06.2017
(51) Int. Cl.: H04L 65/1059, H04L 65/1069, H04L 65/75, H04N 21/242, H04N 21/6543, H04N 5/76, H04L 67/1095

(54) **METHOD AND APPARATUS FOR PERFORMING SYNCHRONIZATION OPERATION ON CONTENTS**
VERFAHREN UND VORRICHTUNG ZUR DURCHFÜHRUNG EINES SYNCHRONISATIONSVORGANGS AUF INHALTEN
PROCÉDÉ ET APPAREIL POUR EFFECTUER UNE OPÉRATION DE SYNCHRONISATION SUR UN CONTENU

(30) Priority: 14.09.2016 CN 201610827449
(43) Date of publication of application: 24.07.2019
(73) Proprietor: BOE Technology Group Co., Ltd., Beijing 100015 (CN)
(72) Inventor: GUO, Zhenpeng, Beijing 100176 (CN); ZHAO, Junjie, Beijing 100176 (CN)
(74) Representative: Brötz, Helmut
(86) International application number: PCT/CN2017/090536
(87) International publication number: WO 2018/049867

(56) References cited:
- WO-A2-2012/018300
- CN-A- 101 159 850
- CN-A- 102 970 589
- CN-A- 103 561 356
- CN-A- 105 657 495
- US-A1- 2013 251 329
- US-A1- 2014 323 036

## Description

### TECHNICAL FIELD

The present disclosure relates to the field of information technology, and more particularly to a method and device for synchronously performing an operation on contents.

### BACKGROUND

At present, when each terminal desires to acquire contents, they need to connect to a content server via network, so as to acquire various contents provided by the content server, or content acquiring is achieved by information sharing between terminals. The requirement of synchronously operating is always involved during the process of content acquiring or after content acquiring.

However, in the case where all terminals achieve on-line content sharing by that one and the same content provider provides on-line contents in real time to share on-line contents to other terminals, synchronously operating the shared contents is not really implemented among the respective terminals, because the time of operating contents by the respective terminals cannot be strictly consistent, it is impossible to ensure that contents are synchronously operated by the respective terminals.
US20130251329A1 discloses systems and methods for synchronizing the playback of network media across multiple content playback devices. In one implementation, client devices are controlled to parse and buffer media content separately. Once all clients are ready, a controller may cause the client devices to start in a synchronized fashion based on signals sent by the controller. The controller adjusts the timing of the signal so that the outputs are displayed in synchronization on each client device. In other implementations, device lag times may be measured. In still other implementations, a master device may synchronize playback of media content on slave devices. In yet other implementations, devices may buffer and join playback of media content occurring on other devices. In further implementations, the systems and methods may be expanded to include steps of processing authentication for service providers prior to arranging synchronized playback. US20140323036A1 discloses embodiments for syncing multiple electronic devices for collective audio playback. According to certain aspects, a master device connects 218 to a slave device via a wireless connection. The master device calculates 224 a network latency via a series of network latency pings with the slave device and sends 225 the network latency to the slave device. Further, the master devices sends 232 a portion of an audio file as well as a timing instruction including a system time to the slave device. The master device initiates 234 playback of the portion of the audio file and the slave devices initiates 236 playback of the portion of the audio file according to the timing instruction and a calculated system clock offset value.
WO2012018300A2 discloses a first User Terminal, UT, and a method performed by a first User Terminal, UT, for synchronizing playback of media streams. The UT selects a media stream to be played synchronously by the first UT and at least one second UT. The first UT provides an indicator associated with the selected media stream and an indicator of the at least one second UT to a coordination server. The first UT requests the selected media stream from streaming storage and buffers the received data being associated with the selected media stream. The first UT then receives synchronization instructions from the coordination server and thereafter initiates playback of the media stream based on the received synchronization instructions, and thereby enabling the first UTs to, with respect to the at least one second UT, synchronously playback the media stream.

### SUMMARY

The present invention is defined by the respective independent claims. Exemplary embodiments are defined by the dependent claims.

### BRIEF DESCRIPTION OF THE DRAWINGS

In order to illustrate the technical solutions in the embodiments of the present disclosure more clearly, drawings necessary for describing the embodiments are briefly introduced as below. Apparently, the drawings described below relate to only some embodiments of the present disclosure, and do not intended to limit the present disclosure.
FIG. 1 is a schematic diagram of a streaming media transmission system.
FIG. 2 schematically illustrates a process of synchronously performing an operation on contents according to an embodiment of the present disclosure.
FIG. 3 schematically illustrates a process of synchronously performing an operation on contents according to another embodiment of the present disclosure.
FIG. 4 schematically illustrates a process of synchronously performing an operation on contents according to still another embodiment of the present disclosure.
FIG. 5 schematically illustrates a process of synchronously performing an operation on contents according to still another embodiment of the present disclosure.
FIG. 6 schematically illustrates a process of synchronously performing an operation on contents according to still another embodiment of the present disclosure.
FIG. 7 schematically illustrates a process of synchronously performing an operation on contents according to still another embodiment of the present disclosure.
FIG. 8 illustrates a schematic flowchart of a method for synchronously performing an operation on contents according to an embodiment of the present disclosure.
FIG. 9 is a schematic block diagram of a device for synchronously performing an operation on contents according to an embodiment of the present disclosure.
FIG. 10 is a schematic block diagram of a device for synchronously performing an operation on contents according to another embodiment of the present disclosure.
FIG. 11 illustrates a schematic flowchart of a method for synchronously performing an operation on contents according to an embodiment of the present disclosure.
FIG. 12 is a schematic diagram of a device for synchronously performing an operation on contents according to an embodiment of the present disclosure.
FIG. 13 is a schematic diagram of a device for synchronously performing an operation on contents according to an embodiment of the present disclosure.

### DETAILED DESCRIPTION OF THE EMBODIMENTS

At present, respective terminals connect to a content server via network so as to acquire various contents provided by the content server. As described above, synchronously operating the shared contents is not really implemented among the respective terminals in such on-line content sharing.

In view of the above problems, the present disclosure provides a method for synchronously performing an operation on contents, comprising:
sending a synchronization instruction by one terminal to one or more other terminals, the synchronization instruction being used for instructing the one or more other terminals to synchronously perform an operation on contents to be operated in synchronization.

If the one terminal also desires to synchronously perform an operation, the one terminal and the one or more other terminals all execute the synchronization instruction, thus achieving that all the terminals that have received the synchronization instruction can synchronously perform an operation on the contents to be operated in synchronization.

The method for synchronously performing an operation on contents according to the embodiments of the present disclosure can enable respective terminals that have received the synchronization instruction, such as mobile terminals, to synchronously perform an operation on the contents to be operated in synchronization, which effectively achieves consistency of synchronization time.

Optionally, the one terminal that sends the synchronization instruction to the one or more other terminals may be a master terminal or a slave terminal among the respective terminals.

For example, if the respective terminals have already stored the contents to be operated in synchronization, and one terminal among the respective terminals is already selected as the master terminal, the other terminals are the slave terminals, and then the one terminal that sends the synchronization instruction may be the master terminal or a slave terminal among the respective terminals.

For example, mobile phones A, B, and C each have locally stored the same music M (e.g., download address, format, volume and so on are exactly the same, respectively). Mobile phones A, B, and C want to play music M synchronously, so that an overall volume becomes higher after the respective mobile phones in the same space play the music, then any one of mobile phones A, B, and C can send a synchronization instruction to the other mobile phones; after receiving the synchronization instruction, the other mobile phones can play music M at a moment when the synchronization time arrives according to the synchronization instruction. Optionally, the mobile phone that sends the synchronization instruction may also play music M at a moment when the synchronization time arrives according to the sent synchronization instruction.

Optionally, each of the above terminals has already stored the contents to be operated in synchronization, which may be respectively acquired from network by the respective terminals, or may also be shared among the respective terminals.

Optionally, a play button or a refuse-to-play button may be set on a related page of a mobile phone, and a user may trigger the play button, so that the synchronization instruction may be executed by a mobile phone system, and when the user triggers the refuse-to-play button, the mobile phone system may not execute the synchronization instruction.

According to another embodiment of the present disclosure, one master terminal may be selected from among the respective terminals to send the contents to be operated in synchronization to one or more slave terminals, respectively.

Optionally, the contents to be operated in synchronization may be contents determined by the master terminal and then sent to the slave terminals. Optionally, the contents to be operated in synchronization may also be contents determined by a certain slave terminal and then sent to the other terminals. Certainly, the contents to be operated in synchronization may also be contents determined by each terminal itself, and in this case, the contents determined by the respective terminals are the same contents.

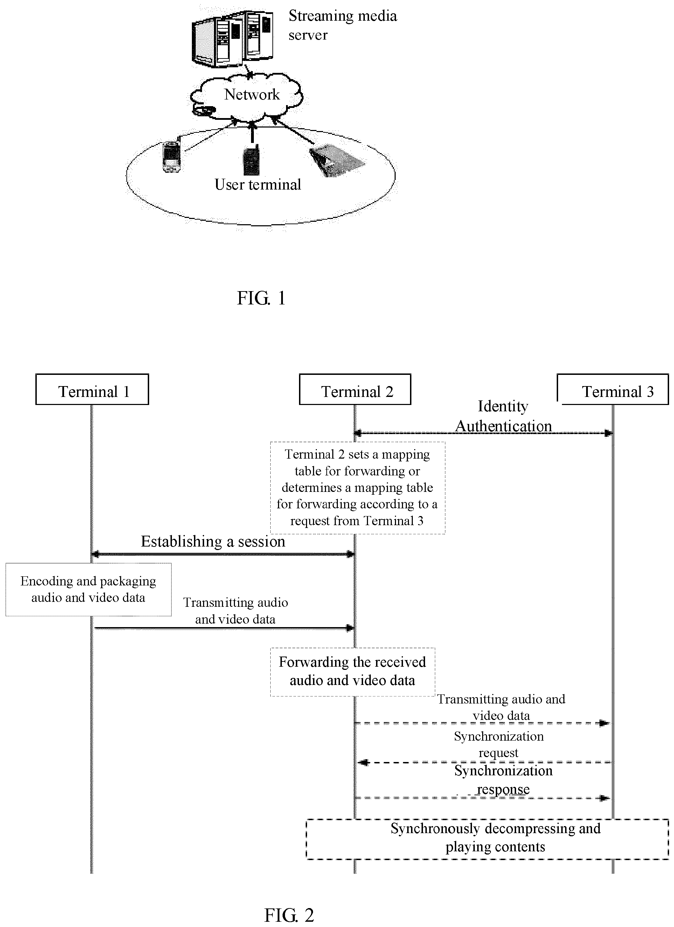

For example, in the case where the master terminal determines the contents to be operated in synchronization and sends them to the slave terminals, a typical application scenario is as follows: as shown in FIG. 1, the respective terminals connect to a streaming media server via a network (a wired network or a wireless network), so as to obtain various streaming media services provided by the streaming media server. For example, multimedia information such as audio/video may be transmitted to terminals by using the streaming media technology, thus providing users with various services, such as media news releasing, webcasting, network advertising, e-commerce, video on demand (VOD), distance education, tele-medicine, Internet radio, real-time video conferencing, and other Internet information services.

In the above application scenario, when streaming transmission is carried out, time-based media such as audio, video or animation is continuously transmitted from an audio-video server to terminals in real-time, users do not have to wait for the entire file to be downloaded completely, but can view only after a start-up delay of a few seconds or tens of seconds, so streaming transmission has avoided the disadvantage that users have to wait for the entire file to be downloaded from the server to the local before viewing. However, the above-described transmission manner essentially based on server-client architecture may not meet requirements of an application scenario where multiple users participate. For example, such architecture requires that all clients (e.g., mobile terminals) establish a connection with the server and receive data from the server, and the respective clients cannot directly exchange data therein between, which is not convenient for synchronously operating contents between the clients.

To this end, according to an embodiment of the present disclosure, it is proposed to select a terminal as a master terminal and the other terminals as slave terminals, and send, by the master terminal, the contents to be operated in synchronization and synchronization instructions to the respective slave terminals, so that the respective slave terminals can operate the contents in synchronization with the master terminal, thus effectuating the application scenario where multiple users participate.

Optionally, determining, by the master terminal, the contents to be operated in synchronization may specifically comprise: receiving, by the master terminal, contents from a remote entity, and determining, by the master terminal, parts or all of currently received contents as the contents to be operated in synchronization; or determining, by the master terminal, parts or all of locally stored contents as the contents to be operated in synchronization.

Optionally, the contents to be operated in synchronization are streaming media contents; the master terminal is a streaming media terminal, and the remote entity is a streaming media terminal or a streaming media server.

Optionally, synchronously performing an operation on the contents to be operated in synchronization comprises performing a synchronous playback operation on the streaming media contents sent to the slave terminals.

Optionally, according to an embodiment of the present disclosure, an application scenario where multiple users participate in synchronously performing an operation on contents is: synchronously performing an operation on contents stored by one user among multiple users.

For example, in an application scenario, when a user's mobile phone 1 needs to share music with mobile phones 2 and 3 of multiple other users in the same conference room, mobile phone 1 may establish a network connection with mobile phones 2 and 3. In this case, mobile phone 1 that provides the music data serves as a master terminal. Of course, mobile phone 2 or 3 may also be used as a master terminal.

Optionally, mobile phone 1 may send the music to mobile phones 2 and 3 after compressing the music or performing other processing on the music, and send synchronization instructions to mobile phones 2 and 3, so that mobile phones 1 to 3 can simultaneously play music according to the synchronization instructions. This will solve the problem of low volume and unsatisfactory playback effect when one mobile phone plays music to share among multiple users.

According to an embodiment of the present disclosure, another application scenario where multiple users participate in synchronously performing an operation on contents may be that multiple local users synchronously perform an operation on streaming media data from a remote server.

For example, as for a remote teleconference, the received multimedia contents may be played by dedicated multimedia terminals in respective branch venues, so that conference contents can be played in respective branch venues in synchronization with a main venue.

According to an embodiment of the present disclosure, as for a remote teleconference between two sites, there may be multiple users participating in a conference at each of sites 1 and 2. In this case, each user at site 1 may hold one mobile terminal, such as a mobile phone. When teleconference data stream at site 2 is transmitted, one of the mobile terminals at site 1 receives the data stream as the master terminal, transmits the data stream received per unit of time period or the processed data stream to the other mobile terminals and sends synchronization instructions to the respective mobile terminals to instruct the respective mobile terminals to synchronously perform an operation at a time node of data synchronization according to the synchronization instructions.

Herein, each unit of time period may be one second, one tenth of a second, one hundredth of a second, and so on. In addition, the master terminal may also buffer the data stream received per unit of time period and then packetize the data stream to transmit.

According to the above embodiments of the present disclosure, since multiple users' simultaneous participation and synchronous operation on the contents can be achieved by using mobile terminals, such as mobile phones, there is no need to use a fixed terminal or a dedicated terminal that is inconvenient to move to perform data synchronization. Requirements of multi-user participating in synchronous operations on contents are met while cost and complexity of system are reduced, which improves users' experience.

The principles of the present disclosure will be described below with respective terminals synchronously playing multimedia contents as an example. However, it should be understood that the principles of the present disclosure are not limited to synchronous playback of multimedia contents, but may be applied to other synchronization operations on data contents by respective users in a scenario with multi-users participation.

As shown in FIG. 2, a process of synchronously playing contents by terminals according to an embodiment of the present disclosure is shown. Optionally, in the present disclosure, the terminals may be, but not limited to, a user terminal (UE). Optionally, the user terminal may be a smart phone, a PDA, a navigator, a handheld computer, a set-top box, or other devices, and no limitation is made herein.

For example, in order to enable synchronous playback of multimedia contents between terminal 2 and terminal 3, terminal 2 may be taken as the master terminal and terminal 3 may be taken as the slave terminal. Master terminal 2 sends the multimedia data to be played synchronously to slave terminal 3. In response to a synchronization instruction from master terminal 2, it is possible to achieve synchronous playback of the received multimedia data between master terminal 2 and slave terminal 3. To this end, a mapping table for forwarding may be defined on master terminal 2 so as to set related information such as a network address identifier of slave terminal 3, which is a send destination. In fact, in this case, master terminal 2 may actively push the related multimedia service to other terminals (not limited to terminal 3 shown in the drawing) according to the set mapping table for forwarding. In this manner, it only needs to set a range of multimedia contents that the user of slave terminal 3 is interested at the time of initial use, and afterwards, terminal 2 will automatically send the received multimedia data to terminal 3 according to the mapping table for forwarding. In other words, this manner actually belongs to an information Push mode.

Optionally, the mapping table for forwarding may be set in advance on master terminal 2. For example, the user of master terminal 2 may set in advance a network address identifier of a terminal (e.g., slave terminal 3) to participate in the synchronous playback. In this way, it may determine which terminal the received multimedia data will be sent to according to the mapping table for forwarding.

Optionally, the mapping table for forwarding may be set on master terminal 2 according to a request from a terminal that will participate in multimedia synchronous playback, so as to record the network address identifier of the terminal that will participate in multimedia synchronous playback.

Optionally, as shown in FIG. 2, according to an application scenario, it may be necessary to perform identity authentication on the terminal that participates in the synchronous playback, so as to ensure that only users with related authority can watch the synchronously-played multimedia contents. Identity authentication may be performed through a pre-set range of IP address, an account and a password provided by the user of the terminal to be authenticated and other ways.

As discussed above, in order to perform synchronous playback of multimedia contents on multiple terminals, corresponding multimedia data needs to be obtained from a multimedia content source. According to an embodiment of the present disclosure, as shown in FIG. 2, terminal 1 provides multimedia contents, and master terminal 2 that serves as a forwarding device establishes a session connection with terminal 1 that serves as the multimedia content source.

Optionally, terminal 1 may be a remote user terminal, and terminals 2 and 3 may be local user terminals.

Optionally, identity authentication of terminal 2 may be performed by terminal 1 according to actual needs.

After establishing the session connection, according to a request for acquiring multimedia data sent by terminal 2, terminal 1 encodes and packages the multimedia data such as audio and video data, and streams them to terminal 2.

Optionally, the step of encoding and packaging multimedia data such as audio and video data by terminal 1 may also be performed before the session connection is established, and no limitation is made herein.

Optionally, when streaming transmission is carried out, HTTP/TCP may be adopted to transmit control information, and Real-time Transmission Protocol/User Datagram Protocol (RTP/UDP) may be adopted to transmit real-time audio and video data.

For the sake of streaming transmission, terminal 1 encodes and compresses audio and video files and packages them into many data packets. Thereafter, terminal 1 sends each data packet to terminal 2. In order to eliminate the influence caused by delay and jitter and ensure the quality of video playing, a buffer zone may be established on master terminal 2 that serves as the forwarding device so as to buffer the audio and video data from terminal 1. A size of the buffer zone may be set in consideration of such factors as a network connection status between terminal 1 and terminal 2, a memory size of terminal 2, quality requirements of playing the audio and video, and the like.

Upon receipt of the data packets, master terminal 2 stores them in the established buffer zone. Optionally, considering that a storage capacity of terminal 2 is limited, the multimedia data that has already been played may be discarded so that vacated space may be reused to buffer subsequent contents that have not been played.

Thereafter, master terminal 2 may send the buffered audio and video data to terminal 3 according to the set mapping table for forwarding.

After receiving the audio and video data from master terminal 2, slave terminal 3 may send a synchronization request to master terminal 2 to request for playing the audio and video data.

In response to the synchronization request from terminal 3, terminal 2 sends a synchronization response, triggers a synchronous playback instruction, so as to synchronously decompress the audio and video data and play the decompressed audio and video data between terminals 2 and 3.

Optionally, before or after the buffered multimedia data is forwarded to terminal 3, terminal 2 may send a synchronization frame to terminal 3, so as to actively trigger the synchronous playback instruction to synchronously decompress the audio and video data and play the decompressed audio and video data between terminals 2 and 3.

Optionally, a synchronization identifier may also be embedded in the buffered multimedia data forwarded to terminal 3 so as to set a condition for triggering synchronous playback, so as to synchronously decompress the audio and video data and play the decompressed audio and video data between terminals 2 and 3.

It should be noted that although some steps are shown as being executed sequentially after some steps in FIG. 2 of the present disclosure, this does not limit to implement the principles of the present disclosure in such a sequence. Actually, as shown in FIG. 2, identity authentications of terminal 2 and terminal 3 and setting of the mapping table for forwarding may be performed absolutely after terminal 2 receives the multimedia contents from terminal 1 or while terminal 2 receives the multimedia contents from terminal 1, so long as terminal 2 obtains the address of terminal 3, which is the send destination, when terminal 2 sends the multimedia data to terminal 3.

Although FIG. 2 shows that only master terminal 2 establishes a session connection with terminal 1, optionally, terminal 2 and terminal 3 may establish a connection with terminal 1 respectively, and one of them may be selected as the master terminal to receive and buffer the multimedia data from terminal 1 that provides the multimedia contents, and forward the buffered multimedia data to another terminal that serves as the slave terminal.

In addition, it should be noted that although in FIG. 2, two terminals 2 and 3 for synchronously playing multimedia data are shown, the principles of the present disclosure may fully apply to a scenario with more than two terminals. In an application of more than two terminals, at least one of the terminals may be selected as the master terminal for buffering or storing the multimedia data, and the other terminals may be selected as the slave terminals for receiving the buffered multimedia data.

Optionally, at least one of one or more local terminals is selected as the master terminal to establish a connection with a remote terminal that provides the multimedia data, so that data from the remote terminal can be received by the master terminal, while the other local terminals serve as the slave terminals to receive the buffered multimedia data forwarded by the master terminal.

Optionally, one or more local terminals establishes a connection with a remote terminal that provides multimedia data, and at least one of them is selected as the master terminal to receive data from the remote terminal, while the other local terminals serve as the slave terminals to receive the buffered multimedia data forwarded by the master terminal.

Optionally, when at least one of one or more local terminals is to be selected as the master terminal, negotiation may be performed among the one or more local terminals to elect at least one of the one or more local terminals as the master terminal to receive data from a remote terminal. Alternatively, at least one of the one or more local terminals may be selected as the master terminal by the remote terminal, so that the master terminal receives data from the remote terminal. For example, performance priority may be set according to factors such as storage capacity, processing capability, network condition, and the like of the respective terminals, and a corresponding terminal may be selected as the master terminal according to the performance priority. Alternatively, a corresponding terminal may be selected as the master terminal according to factors such as historical recording of the respective terminals' connection with the remote terminal, current network connection status, and authority to access the remote terminal.

In the above embodiments of the present disclosure, a terminal is used as the master terminal, the received multimedia contents are buffered by establishing a buffer zone in the master terminal, the buffered multimedia contents are forwarded to other terminals that serve as the slave terminals, and the multimedia contents are synchronously played by the respective slave terminals and the master terminal according to the synchronous playback instructions sent by the master terminal, which eliminates the dedicated streaming media server and the dedicated multimedia terminal, and requirements of multi-user participating in synchronous viewing multimedia contents are met while cost and complexity of system are reduced, which improves users' experience.

Although it has been described above with reference to FIG. 2 that the multimedia data from remote terminal 1 is received by terminal 2 which serves as the master terminal, and parts or all of the multimedia data is forwarded to terminal 3 which serves as the slave terminal, thus achieving synchronous playback of the multimedia data between slave terminal 3 and master terminal 2, according to an actual application scenario, terminal 2 may also send the multimedia resources stored by itself, as the contents to be operated in synchronization by them, to terminal 3, rather than having to receive the contents to be operated in synchronization from remote terminal 1.

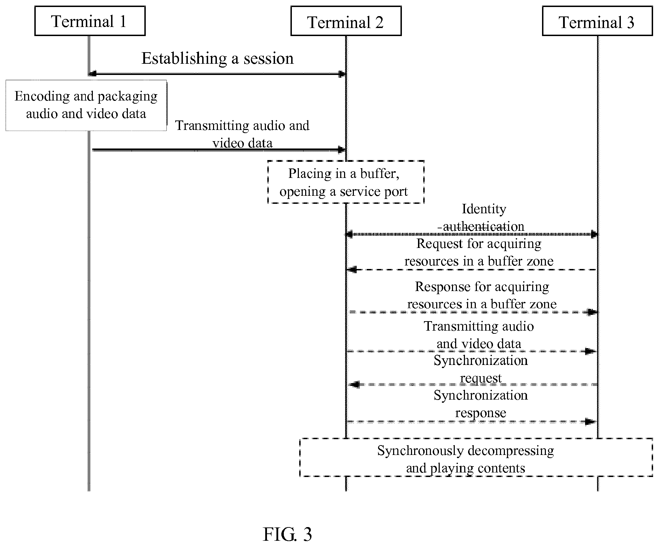

FIG. 3 shows a process of synchronously playing streaming media contents by terminals according to another embodiment of the present disclosure. The main difference in comparison to the embodiment shown in FIG. 2 lies in that, in the embodiment according to FIG. 3, terminal 2 may be used as a virtual server rather than merely a forwarding device, a buffer zone is established in terminal 2 to buffer the audio and video data received from the multimedia source, and according to a request for acquiring multimedia resources received from terminal 3, multimedia data requested is provided to terminal 3. Actually, in this case, master terminal 2, which serves as the virtual server, may provide related multimedia service to other terminals according to a resource acquiring request sent from the other slave terminals that serve as the clients. In this manner, master terminal 2, which serves as the virtual server, processes according to the service request sent from terminal 3 and returns a result desired by the user, that is, an information Pull mode may be adopted.

As shown in FIG. 3, terminal 1 may serve as a remote terminal to provide multimedia contents, and terminal 2 may serve as a virtual server to establish a session connection with terminal 1, so as to receive compressed and encoded and packaged multimedia data (e.g., audio and video data) from terminal 1.

As described above, a buffer zone is established in terminal 2 to buffer audio and video data from terminal 1. For example, the size of the buffer zone may be set in consideration of such factors as the network connection status between terminal 1 and terminal 2, the memory size of terminal 2, quality requirements of playing the audio and video, and the like.

Upon receiving the data packets transmitted from terminal 1, terminal 2 stores them in the established buffer zone. In this embodiment, to enable the multimedia contents to be played synchronously between terminal 2 and terminal 3, a corresponding virtual server port may be set on terminal 2 and opened.

Different than the embodiment described with reference to FIG. 2, terminal 2 may not actively send multimedia data to terminal 3, but send the corresponding multimedia data to terminal 3 after receiving a resource acquiring request from terminal 3. That is, the embodiment shown in FIG. 3 may adopt an information Pull mode.

As shown in FIG. 3, master terminal 2 which serves as a virtual server waits for a resource acquiring request from slave terminal 3 which serves as a client after setting and opening a server port. In response to a received resource acquiring request from slave terminal 3, master terminal 2 transmits parts or all of the multimedia data buffered in the buffer zone to slave terminal 3.

Optionally, as shown in FIG. 3, according to an application scenario, it may be necessary to perform identity authentication on slave terminal 3 that participates in the synchronous playback, so as to ensure that only users with related authority can view the synchronously-played multimedia contents. For example, identity authentication may be performed by a pre-set range of IP address on master terminal 2 that serves as the virtual server, account and password provided by the user of the slave terminal to be authenticated, and other ways.

After transmitting the buffered audio and video data to terminal 3, in response to a synchronous playback request from terminal 3, master terminal 2 may send a synchronization response, thereby triggering the synchronous playback instruction to synchronously decompress the audio and video data and play the decompressed audio and video data between terminal 2 and terminal 3.

Optionally, before or after the buffered multimedia data is forwarded to terminal 3, terminal 2 may send a synchronization frame to terminal 3, so as to actively trigger the synchronous playback instruction to synchronously decompress the audio and video data and play the decompressed audio and video data between terminal 2 and terminal 3.

Optionally, a synchronization identifier may also be embedded in the buffered multimedia data sent to terminal 3 so as to set a condition for triggering the synchronous playback to synchronously decompress the audio and video data and play the decompressed audio and video data between terminal 2 and terminal 3.

Optionally, for example, the multimedia data may be transmitted between terminal 2 and terminal 3 in the following manner: terminal 3 sends a request for acquiring resources to terminal 2, that is, after the user of terminal 3 selects a certain streaming media service, terminal 3 and terminal 2 can exchange control information between each other by using HTTP/TCP, and terminal 3 uses HTTP to retrieve relevant parameters from terminal 2, these parameters may include directory information, an encoding type of the audio and video data, or a network address related to audio and video retrieval; terminal 2 and terminal 3 run a real-time streaming protocol therein between to exchange control information required for audio and video transmission; terminal 2 uses the RTP/UDP protocol to transmit audio and video data to terminal 3. Thereafter, master terminal 2 and slave terminal 3 can synchronously play the multimedia contents in response to the synchronous playback instruction.

In the above-described embodiments of the present disclosure, the master terminal serves as the virtual server, buffers the received multimedia contents by establishing a buffer zone therein, and transmits the corresponding buffered multimedia data in response to the resource acquiring request from a slave terminal, and the multimedia contents are synchronously played by the respective slave terminals and the master terminal according to the synchronous playback instruction, which eliminates the dedicated streaming media server and the dedicated multimedia terminal, and requirements of multi-user participating in synchronous operations on contents are met while cost and complexity of system are reduced, which improves users' experience.

It should be noted that, the above embodiments are fully applicable to a scenario with more than two terminals. In an application of more than two terminals, at least one of the terminals may be selected as the master terminal and the other terminals may serve as the slave terminals, wherein the master terminal serves as the virtual server for buffering the multimedia data, and the slave terminals serve as devices for receiving the buffered multimedia data.

Optionally, at least one of one or more local terminals is selected as the master terminal to establish a connection with a remote terminal that provides the multimedia data, the data received from the remote terminal can be buttered by the master terminal that serves as the virtual server, and the buffered multimedia data is transmitted according to a resource acquiring request from the other terminals that serve as the slave terminals.

Optionally, each of one or more local terminals establishes a connection with a remote terminal that provides multimedia data, and at least one of them is selected as the master terminal to become the virtual server to receive data from the remote terminal, while the other local terminals serve as the slave terminals to send a resource acquiring request to the master terminal that serves as the virtual server, so as to receive the buffered multimedia data sent by the master terminal.

Likewise, negotiation may be performed among one or more local terminals to select at least one of the one or more local terminals as the master terminal to receive data from the remote terminal. Alternatively, at least one of one or more local terminals may be selected as the master terminal by the remote terminal, so that the master terminal receives data from the remote terminal. For example, performance priority may be set according to factors such as storage capacity, processing capability, network condition, and the like of the respective terminals, and a corresponding terminal may be selected as the master terminal according to the performance priority. Alternatively, a corresponding terminal may be selected as the master terminal according to historical recording of the respective terminals' connection with the remote terminal, current network connection status, and authority to access the remote terminal.

Although the remote terminal (e.g., a streaming media terminal) is used as a source of contents to be operated (e.g., the multimedia data to be played in synchronization) in FIGS. 2 and 3, optionally, a server (e.g., a streaming media server) may be adopted as the source of the contents to be operated (e.g., the multimedia data to be played synchronously), there is no limitation herein.

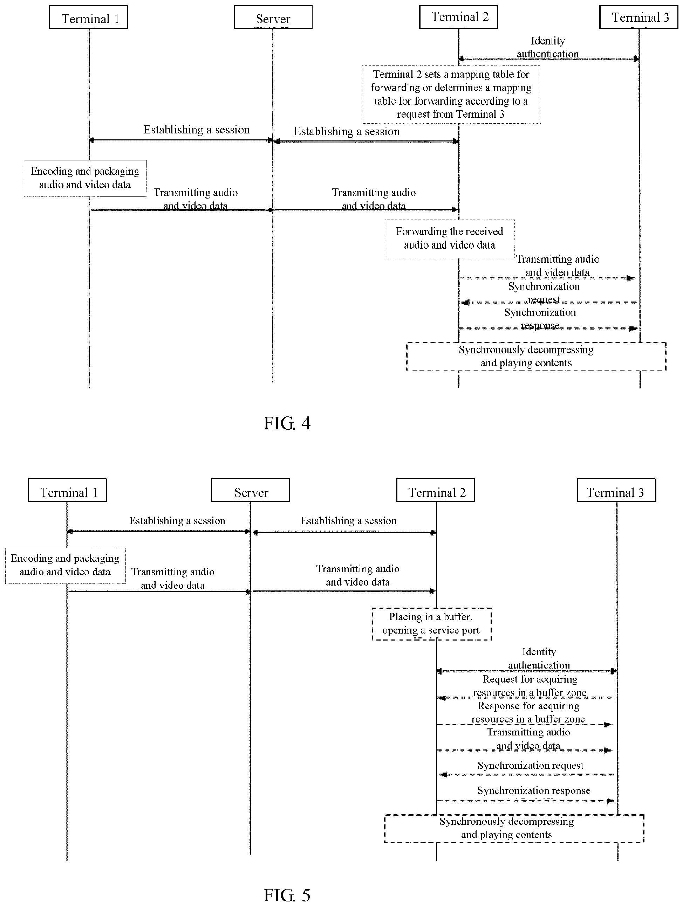

FIG. 4 illustrates a process of implementing synchronous playback of multimedia contents among multiple terminals according to another embodiment of the present disclosure. As shown in FIG. 4, terminal 1 that provides multimedia data establishes a session connection with a server, so as to upload audio and video files to the server. After identity of terminal 1 pass the authentication by the server, terminal 1 may send the corresponding audio and video data to the server. Terminal 1 may adopt various manners to encode and package the audio and video files to be uploaded, so as to upload the audio and video files to the server. To obtain the multimedia resources provided by terminal 1, local terminal 2 may serve as a master terminal and establish a session connection with the server, so as to be able to receive or acquire the multimedia data uploaded by terminal 1 from the server. With regard to multimedia data transmission between the server and terminal 2, the Push mode or Pull mode may be adopted as described above. The Push mode is actively, purposefully sending user-interested information to the terminals on time according to user needs. The Push mode's main advantages arc: first, low user requirements, universal applicability to the general public; second, good timeliness, the source promptly "push" continuously updated dynamic information to the user; the Pull mode refers to the user purposely, actively inquires information on network, the user sends a request to the server from a client browser, the server acquires the needed information, the Pull mode's main advantages are: highly pertinence, capability of meeting personalized needs of users; information transmission amount is small, what is transmitted on the network is only the user's request and the server's response to the request; the information source has a light task, the information system is only to passively accept the query, and to provide some information the user needs. Alternatively, the two modes of information Push and Pull may be combined. For example, first-Push-then-Pull, that is, firstly the server promptly pushes public information, and then the terminal user pulls personalized information in a targeted manner; first-Pull-then-Push, that is, the server further actively provides (pushes) the related information; Pull-in-Push, that is, during information push, the terminal user is allowed to interrupt and freeze in the audio and video resources of interest at any time to pull more targeted information; Push-in-Pull, that is, according to keywords used by the terminal user during the search (i.e., pull) process, the server which serves as the information source actively pushes the latest relevant information.

In addition, in consideration of the memory capacity of the terminal and its network conditions with the server, in order to ensure the quality of the real-time transmission, a buffer zone may be established on terminal 2 to buffer the multimedia data received from the server.

As for multimedia data transmission and synchronous playback between terminal 2 and terminal 3, the manners of FIG. 2 or FIG. 3 may be adopted. If the forwarding manner of FIG. 2 is adopted, the process shown in FIG. 4 may be formed; and if the virtual server manner of FIG. 3 is adopted, the process shown in FIG. 5 may be formed. For the sake of avoiding repetition, reference may be made to description of the embodiments shown in FIG. 2 and FIG. 3 for details, and no more repetition is made herein.

FIGS. 2-5 show the manner of transmitting audio and video data in which audio and video files are encoded and packaged on terminal 1 (e.g., remote terminal) that serves as the multimedia source and then sent to the server or terminal 2 (e.g., local terminal) that serves as a master terminal. Optionally, in a real-time application (such as live streaming media broadcast), terminal 1 may send the multimedia data to terminal 2 or the server while encoding them according to a current network status and the terminal's performance parameters. Alternatively, in some non-real-time application, the multimedia data may be encoded and packaged in advance, when providing the multimedia service, terminal 2 or the server directly reads the encoded and packaged data.

Optionally, during multimedia data transmission, a code stream adaptive manner may be adopted: a video code stream in a multimedia file is converted into a code stream with a specific code rate and an image size; or the same segment of video contents is encoded to generate code streams with different code rates and image sizes, and then the most appropriate code stream is adaptively selected to transmit to a receiver. Depending on circumstances, this can be carried out on any one of terminal 1, the server, and terminal 2. The generated code stream also needs to be further packaged into data packets under a specific network transmission protocol for network transmission. In order to improve transmission reliability, the data packets transmitted may be protected by using forward error correction coding (FEC). After receiving the transmitted data, if there is a packet loss or a bit error, the receiver's error recovery processing can recover the transmission error based on attached error correction data. If the transmission error still cannot be recovered, the receiver can send a retransmission request to the sender and lost packets can be retransmitted before decoding starts. The recovered multimedia data will be decoded by the decoder to obtain reconstructed multimedia data. Due to error tolerance protection and data retransmission may not be able to recover all the erroneous data, these errors may also be covered up by using relevance of the reconstructed multimedia data and utilizing the receiver's error concealment mechanism, thus finally performing synchronous playback.

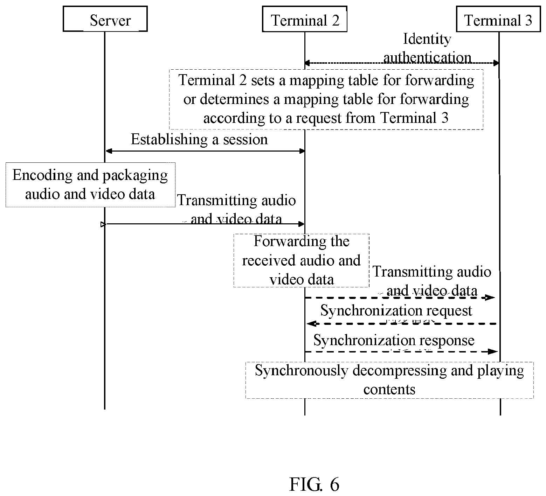

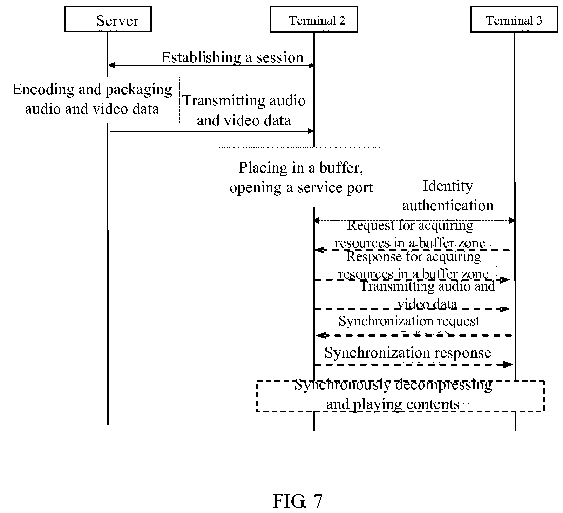

Optionally, as described above, the source that provides the contents to be operated in synchronization (e.g., the multimedia data to be played synchronously) may be a server (e.g., a streaming media server). As shown in FIG. 6 or 7, master terminal 2 may also directly obtain the encoded and packaged multimedia data from the server. This case applies to a scenario where the server directly provides the multimedia data. As for multimedia data transmission and synchronous playback between terminal 2 and terminal 3, the manners of FIG. 2 or FIG. 3 may be adopted. If the forwarding manner of FIG. 2 is adopted, the process shown in FIG. 6 may be formed; if the virtual server manner of FIG. 3 is adopted, the process shown in FIG. 7 may be formed. For the sake of avoiding repetition, reference may be made to description of the embodiments shown in FIG. 2 and FIG. 3 for details, and no more repetition is made herein.

According to an embodiment of the present disclosure, there is provided a method for synchronously performing an operation on contents, comprising: sending a synchronization instruction to one or more terminals, the synchronization instruction being used for instructing the one or more terminals to synchronously perform an operation on contents to be operated in synchronization.

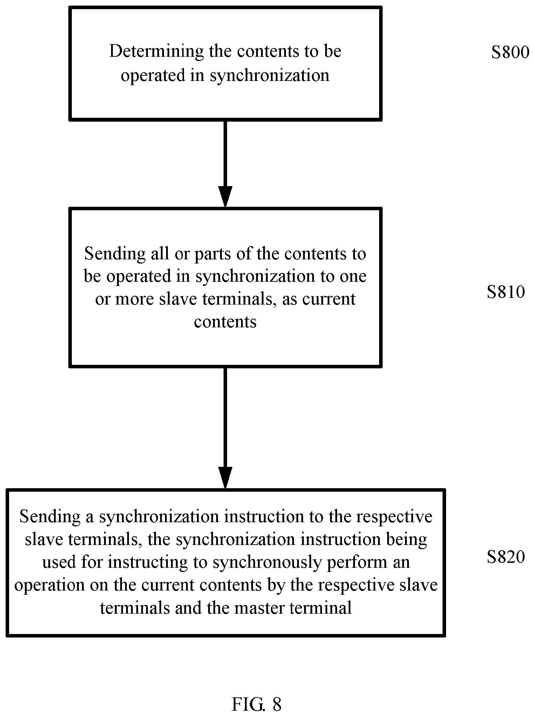

As an example, FIG. 8 illustrates a method for synchronously operating an operation on contents according to an embodiment of the present disclosure, the method comprises: S800, determining, by the master terminal, the contents to be operated in synchronization; S810, sending, by the master terminal, all or parts of the contents to be operated in synchronization to one or more slave terminals, as current contents; and S820, sending, by the master terminal, a synchronization instruction to the respective slave terminals, the synchronization instruction being used for instructing to synchronously perform an operation on the current contents by the respective slave terminals and the master terminal.

Optionally, determining, by the master terminal, the contents to be operated in synchronization comprises: receiving, by the master terminal, the contents to be operated in synchronization from a remote entity; or determining, by the master terminal, locally stored contents as the contents to be operated in synchronization.

Optionally, the contents to be operated in synchronization are streaming media contents; the master terminal is a streaming media terminal, and the remote entity is a streaming media terminal or a streaming media server.

Optionally, synchronously performing an operation on the currents contents comprises: synchronously performing a playback operation on the streaming media contents sent to the slave terminals.

Optionally, the method further comprises: receiving, by the master terminal, an election request from the one or more slave terminals, the election request being used to indicate that the master terminal serves as a terminal for receiving the contents to be operated in synchronization from the remote entity.

Optionally, the method further comprises: receiving, by the master terminal, a connection request from the one or more slave terminals, the connection request being used to indicate that the master terminal serves as a terminal for receiving the contents to be operated in synchronization from the remote entity.

Optionally, the method further comprises: receiving, by the master terminal, indication information sent by the remote entity, the indication information being used to indicate that the master terminal serves as a terminal for receiving the contents to be operated in synchronization from the remote entity.

Optionally, prior to sending, by the master terminal, all or parts of the contents to be operated in synchronization to the one or more slave terminals, respectively, the method further comprises: determining that the one or more slave terminals are terminals whose identity pass the authentication.

Optionally, the method further comprises: determining a mapping table for forwarding; sending all or parts of the contents to be operated in synchronization to the slave terminals according to identification information of the slave terminals recorded in the mapping table for forwarding.

Optionally, the mapping table for forwarding is set in advance or set in response to a request from the slave terminals.

Optionally, the method further comprises: establishing, by the master terminal, a service port; and sending, by the master terminal, the contents to be operated in synchronization from the service port to the slave terminals, in response to a content acquiring request from the slave terminals.

Optionally, the method further comprises: triggering the synchronization instruction in response to a synchronization request from the slave terminals; or triggering the synchronization instruction by sending a synchronization frame or a synchronization identifier to the slave terminals.

In addition, the present disclosure provides another method for synchronously performing an operation on contents, comprising:
receiving a synchronization instruction, the synchronization instruction being used for instructing to synchronously perform an operation on contents to be operated in synchronization; and synchronously performing an operation on the contents to be operated in synchronization according to the synchronization instruction.

Optionally, the contents to be operated in synchronization sent by a master terminal are received by slave terminals; and the synchronization instruction sent by the master terminal are received by the slave terminals.

Optionally, the contents are streaming media contents; and the master terminal is a streaming media terminal.

Optionally, prior to receiving the synchronization instruction by the slave terminals, the method may further comprise: sending, by the slave terminals, a content synchronization request to a remote entity, so as to request the remote entity to send contents to be synchronized, such as synchronous video of a teleconference; after receiving the content synchronization request sent from multiple terminals, determining the respective terminals belonging to a same group, selecting one terminal among them as the master terminal and the other terminals as slave terminals, and sending synchronization instruction information to the respective terminals, by the remote entity; and receiving, by the slave terminals, synchronization instruction information returned by the remote entity, the synchronization instruction information being used to instruct the slave terminals to operate in synchronization according to the synchronization instruction from the master terminal; the synchronization instruction information being further used to instruct the master terminal to send a synchronization instruction to the slave terminals, or instruct the master terminal to send a synchronization instruction and the contents to be operated in synchronization to the slave terminals.

After receiving the contents sent by the remote entity, the master terminal may then send to the slave terminals depending on a receiving speed, or re-package and send at a new sending speed. For example, after a certain amount of contents are received at a current moment, all of the contents may be immediately sent to the slave terminals, or the contents may be cached and packaged in a buffer and then sent to the slave terminals.

An embodiment of the present disclosure provides a device for synchronously performing an operation on contents, comprising:
a sending module, such as a transceiver, configured to send a synchronization instruction to one or more terminals, the synchronization instruction being used for instructing the one or more terminals to synchronously perform an operation on contents to be operated in synchronization.

An embodiment of the present disclosure provides another device for synchronously performing an operation on contents, comprising:
a receiving module, such as a transceiver, configured to receive a synchronization instruction, the synchronization instruction being used for instructing to synchronously perform on operation on contents to be operated in synchronization; and
a processing module, such as a processor, being configured to synchronously perform an operation on the contents to be operated in synchronization according to the synchronization instruction.

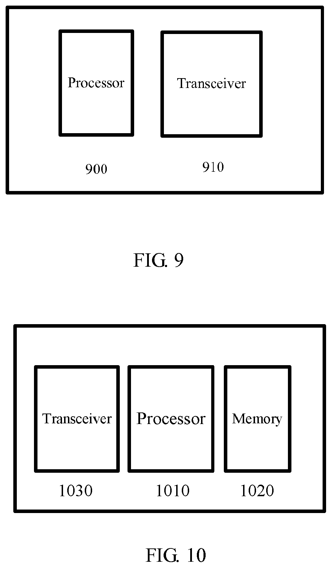

More particularly, FIG. 9 is a schematic block diagram of a device for synchronously performing an operation on contents according to an embodiment of the present disclosure. As shown in FIG. 9, the device comprises: a processor 900 for determining contents to be operated in synchronization; and a transceiver 910 for respectively sending, to one or more slave terminals, all or parts of the contents to be operated in synchronization as current contents; wherein the processor 900 is configured to instruct the transceiver 910 to send a synchronization instruction to the respective slave terminals, the synchronization instruction being used for instructing to the respective slave terminals and the master terminal to synchronously perform an operation on the current contents.

Optionally, the processor in the above device is configured to: determine a mapping table for forwarding; instruct the transceiver to send all or parts of the contents to be operated to at least one slave terminal according to the mapping table for forwarding.

Optionally, the processor in the above device is configured to: set the mapping table for forwarding in advance or set the mapping table for forwarding in response to a request from the slave terminals.

Optionally, the processor in the above device is further configured to: establish a service port; and send all or parts of the contents to be operated to at least one slave terminal in response to a content acquiring request from the at least one slave terminal.

Optionally, the processor in the above device is further configured to: trigger the synchronization operation on the current contents according to a synchronization request from at least one terminal.

Optionally, the processor in the above device is further configured to: trigger the synchronization operation on the current contents by instructing the transceiver to send a synchronization frame or a synchronization identifier to at least one terminal.

Optionally, the transceiver in the above device is configured to: establish a connection with the remote terminal that provides all or parts of the contents to be operated.

Optionally, the transceiver in the above device is configured to: establish a connection with the remote terminal that provides all or parts of the contents to be operated via a server.

Optionally, the transceiver in the above device is configured to: establish a connection with a server that provides all or parts of the contents to be operated.

Optionally, the above device is a terminal, including but not limited to, at least one of the following: a smart phone, a PDA, a tablet, a navigator, a set top box.

FIG. 10 is a schematic block diagram of a control device for synchronously performing an operation on contents according to another embodiment of the present disclosure. As shown in FIG. 10, the control device comprises a processor 1010, a memory 1020 connected to the processor, and a transceiver 1030, wherein the memory 1020 stores instructions, the processor 1010 is configured to execute, when running the instructions stored in the memory 1020, the following steps: determining the contents to be operated in synchronization; instructing the transceiver to respectively send, to one or more slave terminals, all or parts of the contents to be operated in synchronization as current contents; and instructing the transceiver to send a synchronization instruction to the respective slave terminals, the synchronization instruction being used for instructing the respective slave terminals and the master terminal to synchronously perform an operation on the current contents.

According to another aspect of the present disclosure, there is provided a method of synchronously performing an operation on contents, comprising: receiving a synchronization instruction, the synchronization instruction being used for instructing to synchronously perform an operation on contents to be operated in synchronization; and synchronously performing an operation on the contents to be operated in synchronization according to the synchronization instruction.

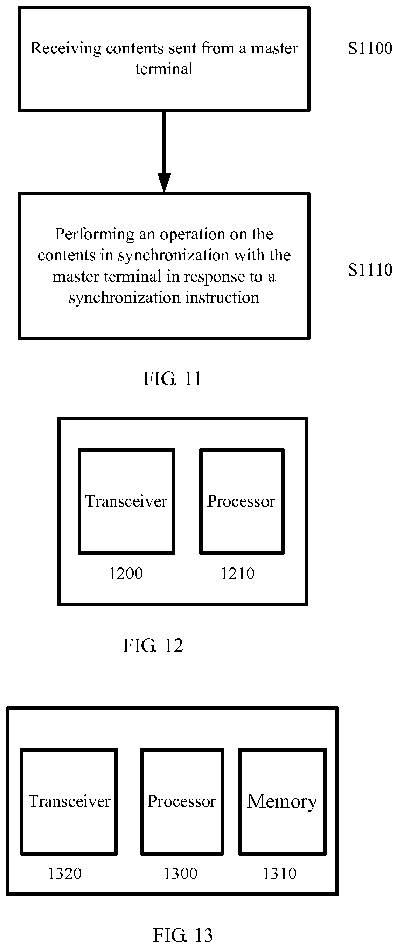

As an example, FIG. 11 illustrates a schematic flowchart of a method for synchronously performing an operation on contents according to an embodiment of the present disclosure. As shown in FIG. 11, the method comprises: S1100, receiving contents sent from a master terminal; and S1110, receiving a synchronization instruction from the master terminal, the synchronization instruction being used for instructing slave terminals that have received the contents to perform an operation on the contents in synchronization with the master terminal.

Optionally, the contents are streaming media contents, and the master terminal is a streaming media terminal.

Optionally, the method further comprises: sending a request for establishing a mapping table for forwarding to the master terminal.

Optionally, the method further comprises: sending a request for acquiring resources to the master terminal.

Optionally, the method further comprises: sending a synchronization request to the master terminal, so as to trigger the synchronization instruction.

Optionally, the method further comprises: receiving a synchronization frame or a synchronization identifier sent by the master terminal, so as to trigger the synchronization instruction.

FIG. 12 is a schematic diagram of a device for synchronously performing an operation on contents according to an embodiment of the present disclosure. As shown in FIG. 12, the device comprises: a transceiver 1200, configured to receive contents and a synchronization instruction sent by the master terminal; and a processor 1210 configured to instruct to perform an operation on the contents in synchronization with the master terminal according to the synchronization instruction.

FIG. 13 is a schematic diagram of a device for synchronously performing an operation on contents according to an embodiment of the present disclosure. As shown in FIG. 13, the device comprises: a processor 1300, a memory 1310 connected to the processor, and a transceiver 1320, wherein the memory stores instructions, the processor is configured to: when running instructions stored in the memory, instructing the transceiver to receive contents and an synchronization instruction sent by a master terminal, the synchronization instruction being used to instruct to perform an operation on the contents in synchronization with the master terminal.

Optionally, the above device is a terminal, including but not limited to, at least one of the following: a smart phone, a PDA, a tablet, a navigator and a set-top box.

In the above embodiments of the present disclosure, a terminal is used as a master terminal, to send contents from a remote entity or contents stored by itself to other slave terminals, and an operation is performed synchronously on contents between the master terminal and respective slave terminals according to an synchronization instruction, thus effectuating the application scenario where multiple users participate while cost and complexity of system are reduced, which improves users' experience.

According to the above embodiments of the present disclosure, a terminal is used as a forwarding device, the received multimedia contents are buffered by establishing a buffer zone therein, the buffered multimedia contents are forwarded to other terminals, and the multimedia contents are synchronously played by the respective terminals according to the synchronous playback instruction, which eliminates the dedicated streaming media server and the dedicated multimedia terminal, and requirements of multi-user participating in synchronously viewing multimedia contents are met while cost and complexity of the system are reduced, which improves users' experience.

According to the above embodiments of the present disclosure, a terminal is used as a virtual server, a buffer zone is established therein to buffer the received multimedia contents, the corresponding buffered multimedia data is transmitted in response to the resource acquiring request from other terminals, and the multimedia contents are synchronously played by the respective terminals according to the synchronous playback instruction, which eliminates the dedicated streaming media server and the dedicated multimedia terminal, and requirements of multi-user participating in synchronously viewing multimedia contents are met while cost and complexity of system are reduced, which improves users' experience.

Those skilled in the art will understand that the block diagrams appearing in this specification represent illustrative conceptual views of circuits that implement the principles of the present disclosure. Similarly, it will be understood that any flowsheet, flowchart, state transition diagram, pseudo-code etc. represents a variety of processes that can be substantially represented in computer-readable mediums and executed by a computer or processor, no matter whether the computer or processor is clearly showed. Written computer readable mediums and codes may be implemented in a transitory state (signal) and a non-transitory state (e.g., on a tangible medium such as CD-ROM, DVD, Blu-ray, hard driver, flash memory card, or other types of tangible storage mediums).

Functions of the various elements shown in the drawings may be provided by the use of dedicated hardware and hardware capable of executing software in conjunction with suitable software. When provided by a processor, these functions may be provided by a single dedicated processor or a single shared processor or multiple independent processors some of which may be shared. Also, an explicit use of the term "processor" or "controller" should not be interpreted as exclusively referring to hardware capable of executing software, but may implicitly include, without limitation, digital signal processor ("DSP") hardware, read only memory ("ROM") for storing software, random access memory ("RAM"), and nonvolatile memory.

## Claims

1. A method for synchronously performing an operation on contents, wherein the method comprises:
sending, by a terminal, a content synchronization request to a remote entity, wherein the remote entity receives content synchronization requests from one or more terminals, when the remote entity determines that terminals transmitting content synchronization requests belong to one group, the remote entity selects the terminal as the master terminal and the rest as slave terminals;
receiving a synchronization instruction information sent by the remote entity, ; the synchronization instruction information being used to instruct the master terminal to send a synchronization instruction to the slave terminals and instruct the slave terminals to synchronously perform an operation according to the synchronization instruction;
determining, by the master terminal, contents to be operated in synchronization (S800);
sending, by the master terminal, the contents to be operated in synchronization to the slave terminals according to the synchronization instruction information, respectively (S810); and
sending, by the master terminal the synchronization instruction to the slave terminals (S820), the synchronization instruction being used for instructing the slave terminals to synchronously perform an operation on contents to be operated in synchronization.

2. The method according to claim 1, wherein determining, by the master terminal, the contents to be operated in synchronization comprises:
receiving, by the master terminal, contents from the remote entity, and determining, by the master terminal, parts or all of currently received contents as the contents to be operated in synchronization, the remote entity being a streaming media terminal or a streaming media server.

3. The method according to claim 1, wherein the master terminal determines parts or all of locally stored contents as the contents to be operated in synchronization.

4. The method according to any one of claims 2 to 3, further comprising: prior to sending, by the master terminal, the contents to be operated in synchronization to the one or more slave terminals, respectively, performing identity authentication on the one or more slave terminals.

5. The method according to any one of claims 2 to 4, further comprising:
determining, by the master terminal, a mapping table for forwarding; and
sending, by the master terminal, all or parts of the contents to be operated in synchronization to the one or more slave terminals, according to identification information of the one or more slave terminals recorded in the mapping table for forwarding,
wherein the mapping table for forwarding is set in advance or set in response to a request from the one or more slave terminals.

6. The method according to any one of claims 2 to 4, further comprising:
establishing, by the master terminal, a service port; and
sending, by the master terminal, the contents to be operated in synchronization from the service port to the one or more slave terminals, in response to a content acquiring request from the one or more slave terminals.

7. The method according to any one of claims 2 to 4, further comprising:
triggering, by the master terminal, the synchronization instruction in response to a synchronization request from the one or more slave terminals; or
triggering, by the master terminal, the synchronization instruction by sending a synchronization frame or a synchronization identifier to the one or more slave terminals.

8. A method for synchronously performing an operation on contents, wherein the method comprises:
sending, by slave terminals, content synchronization requests to a remote entity, wherein the remote entity receives content synchronization requests from the one or more terminals, when the remote entity determines that the terminals transmitting content synchronization requests belong to one group, the remote entity selects a terminal as a master terminal and the rest as the slave terminals; and
receiving, by slave terminals synchronization instruction information returned by the remote entity, the synchronization instruction information being used to instruct the master terminal to send a synchronization instruction to the slave terminals and instruct the slave terminals to synchronously perform an operation according to the synchronization instruction ;
receiving, by slave terminals, contents to be operated in synchronization from the master terminal,
receiving, by slave terminals the synchronization instruction from the master terminal (S1100), the synchronization instruction being used for instructing to synchronously perform an operation on contents to be operated in synchronization; and
synchronously performing, by slave terminals an operation on the contents to be operated in synchronization according to the synchronization instruction (S 1110).

9. A master device for synchronously performing an operation on contents, wherein the device comprises:
a processor (900;1010) and a transceiver (910; 1030),
the transceiver(910; 1030) being configured to:
send a content synchronous request to a remote entity, wherein the remote entity receives content synchronization requests from one or more devices, when the remote entity determines that devices transmitting content synchronization requests belong to one group, the remote entity selects the a device as the master device and the rest as slave devices;
receive a synchronization instruction information sent by the remote entity, the synchronization instruction information being used to instruct the master device to send a synchronization instruction to the slave devices and instruct the slave devices to synchronously perform an operation according to the synchronization instruction; and
send contents to be operated in synchronization to the slave devices according to the synchronization instruction information, respectively (S810),
the processor being configured to:
determine the contents to be operated in synchronization (S800); and
instruct the transceiver to send a synchronization instruction to the slave devices, the synchronization instruction being used for instructing the slave devices to synchronously perform an operation on contents to be operated in synchronization.

10. A slave device for synchronously performing an operation on contents, wherein the device comprises:
a processor (1210;1300) and a transceiver (1200;1320),
the transceiver being configured to:
send a content synchronization request to a remote entity, wherein the remote entity receives content synchronization requests from one or more devices, when the remote entity determines that the devices transmitting content synchronization requests belong to one group, the remote entity selects one device as a master device and the rest as slave devices; and
receive a synchronization instruction information returned by the remote entity, the synchronization instruction information being used to instruct the master device to send a synchronization instruction to the slave devices and instruct the slave devices to synchronously perform an operation according to the synchronization instruction ; and
receive contents to be operated in synchronization sent by the master device,
receive the synchronization instruction from the master device, the synchronization instruction being used for instructing to synchronously perform an operation on contents to be operated in synchronization; and
the processor being configured to:
synchronously perform an operation on the contents to be operated in synchronization according to the synchronization instruction.

## Patentansprüche

1. Verfahren zur synchronen Durchführung einer Operation an Inhalten, wobei das Verfahren umfasst:
Senden mittels eines Terminals eine Inhaltssynchronisationsanforderung an eine entfernte Entität, wobei die entfernte Entität Inhaltssynchronisationsanforderungen von einem oder mehreren Terminals empfängt, wobei, wenn die entfernte Entität bestimmt, dass Terminals die Inhaltssynchronisationsanforderungen senden, zu einer Gruppe gehören, die entfernte Entität das Terminal als das Master-Terminal und die restlichen als Slave-Terminals auswählt;
Empfangen einer mittels der entfernten Entität gesendeten Synchronisationsanweisungsinformation, wobei die Synchronisationsanweisungsinformation verwendet wird, um das Master-Terminal anzuweisen, eine Synchronisationsanweisung an die Slave-Terminals zu senden und die Slave-Terminals anzuweisen, eine Operation gemäß der Synchronisationsanweisung synchron durchzuführen;
Bestimmen mittels des Master-Terminals (S800) von Inhalten, die in Synchronisation handzuhaben sind;
jeweiles Senden mittels des Master-Terminals der in Synchronisation handzuhabenden Inhalte an die Slave-Terminals gemäß der Synchronisationsanweisungsinformation (S810); und
Senden mittels des Master-Terminals gemäß der Synchronisationsanweisung an die Slave-Terminals (S820), wobei die Synchronisationsanweisung verwendet wird, um die Slave-Terminals anzuweisen, synchron eine Operation an synchron handzuhabenden Inhalten durchzuführen.

2. Verfahren gemäß Anspruch 1, wobei die Bestimmung der in Synchronisation zu handhabenden Inhalte mittels des Master-Terminals umfasst:
Empfangen von Inhalten von der entfernten Entität mittels des Master-Terminals und Bestimmen mittels des Master-Terminals von Teilen oder allen aktuell empfangenen Inhalten als die in Synchronisation handzuhabenden Inhalte, wobei die entfernte Entität ein Streaming Media Terminal oder ein Streaming Media Server ist.

3. Verfahren gemäß Anspruch 1, wobei das Master-Terminal Teile oder alle lokal gespeicherten Inhalte als die in Synchronisation zu handhabenden Inhalte bestimmt.

4. Verfahren gemäß einem der Ansprüche 2 bis 3, ferner umfassend: vor dem Senden mittels des Master-Terminals in Synchronisation handzuhabenden Inhalte an das eine bzw. die mehreren Slave-Terminals Durchführung von Identitätsauthentifizierung an dem einen oder den mehreren Slave-Terminals.

5. Verfahren gemäß einem der Ansprüche 2 bis 4, das ferner umfasst:
Bestimmen mittels des Master-Terminals einer Zuordnungstabelle für die Weiterleitung; und
Senden mittels des Master-Terminals aller oder von Teilen der in Synchronisation handzuhabenden Inhalte an das eine oder mehrere Slave-Terminals gemäß der Identifikationsinformation des einen oder der mehreren Slave-Terminals, die gespeichert sind in der Zuordnungstabelle zur Weiterleitung,
wobei die Zuordnungstabelle zur Weiterleitung im Voraus oder als Reaktion auf eine Anforderung von dem einen oder mehreren Slave-Terminals eingestellt wird.

6. Verfahren gemäß einem der Ansprüche 2 bis 4, das ferner umfasst:
Einrichten mittels des Master-Terminals eines Service-Ports; und
Senden mittels des Master-Terminals der synchron handzuhabenden Inhalte vom Service-Port zu dem einen oder mehreren Slave-Terminals als Reaktion auf eine Inhaltserfassungsanforderung von dem einen oder mehreren Slave-Terminals.

7. Das Verfahren gemäß einem der Ansprüche 2 bis 4, das ferner umfasst:
Auslösen mittels des Master-Terminals der Synchronisationsanweisung als Reaktion auf eine Synchronisationsanforderung von dem einen oder mehreren Slave-Terminals; oder
Auslösen mittels des Master-Terminals des Synchronisationsbefehls mittels Senden eines Synchronisationsrahmens oder eines Synchronisationsidentifikators an das eine oder mehrere Slave-Terminals.

8. Verfahren zur synchronen Durchführung einer Operation an Inhalten, wobei das Verfahren umfasst:
Senden mittels Slave-Terminals von Inhaltssynchronisationsanforderungen, an eine entfernte Entität, wobei die entfernte Entität Inhaltssynchronisationsanforderungen von dem einen oder mehreren Terminals empfängt, wobei, wenn die entfernte Entität feststellt, dass die Terminals, die Inhaltssynchronisationsanforderungen senden, zu einer Gruppe gehören, die entfernte Entität ein Terminal als ein Master-Terminal und die restlichen als die Slave-Terminals auswählt; und
Empfangen mittels des Slave-Terminals von Synchronisationsanweisungsinformation, die mittels der entfernten Entität zurückgegeben werden, wobei die Synchronisationsanweisungsinformation verwendet wird, um das Master-Terminal anzuweisen, eine Synchronisationsanweisung an die Slave-Terminals zu senden und die Slave-Terminals anzuweisen, eine Operation gemäß der Synchronisationsanweisung synchron durchzuführen;
Empfangen mittels Slave-Terminals von Inhalten, die vom Master-Terminal in Synchronisation gehandhabt werden sollen,
Empfangen mittels Slave-Terminals der Synchronisationsanweisung von dem Master-Terminal (S1100), wobei die Synchronisationsanweisung verwendet wird, um die synchrone Durchführung einer Operation an den synchron handzuhabenden Inhalten anzuweisen; und
synchrone Durchführung einer Operation an den synchron handzuhabenden Inhalten mittels Slave-Terminals gemäß der Synchronisationsanweisung (S1110).

9. Master-Vorrichtung zur synchronen Durchführung einer Operation an Inhalten, wobei die Vorrichtung umfasst:
einen Prozessor (900; 1010) und einen Transceiver (910; 1030),
wobei der Transceiver (910; 1030) konfiguriert ist zum:
Senden einer Inhaltssynchronisationsanforderung an eine entfernte Entität, wobei die entfernte Entität Inhaltssynchronisationsanforderungen von einer oder mehreren Vorrichtungen empfängt, wobei, wenn die entfernte Entität bestimmt, dass Vorrichtungen, die Inhaltssynchronisationsanforderungen senden, zu einer Gruppe gehören, die entfernte Entität die Vorrichtung als Master-Vorrichtung und die restlichen als Slave-Vorrichtungen auswählt;
Empfangen einer mittels der entfernten Entität gesendeten Synchronisationsanweisungsinformation, wobei die Synchronisationsanweisungsinformation verwendet wird, um die Master-Vorrichtung anzuweisen, eine Synchronisationsanweisung an die Slave-Vorrichtungen zu senden, und die Slave-Vorrichtungen anzuweisen, eine Operation gemäß der Synchronisationsanweisung synchron durchzuführen; und
Senden von synchron zu handhabenden Inhalten an die Slave-Vorrichtungen (S810) gemäß der Synchronisationsanweisung,
wobei der Prozessor konfiguriert ist:
zum Bestimmen der in Synchronisation zu handhabenden Inhalte (S800); und
zum Anweisen des Transceivers, eine Synchronisationsanweisung an die Slave-Vorrichtungen zu senden, wobei die Synchronisationsanweisung verwendet wird, um die Slave-Vorrichtungen anzuweisen, eine Operation synchron an den in Synchronisation zu handhabenden Inhalten durchzuführen.

10. Slave-Vorrichtung zur synchronen Durchführung einer Operation an Inhalten, wobei die Vorrichtung umfasst:
einen Prozessor (1210; 1300) und einen Transceiver (1200; 1320),
wobei der Transceiver konfiguriert ist zum:
Senden einer Inhaltssynchronisationsanforderung an eine entfernte Entität, wobei die entfernte Entität Inhaltssynchronisationsanforderungen von einer oder mehreren Vorrichtungen empfängt, wobei, wenn die entfernte Entität feststellt, dass die Vorrichtungen, die Inhaltssynchronisationsanforderungen senden, zu einer Gruppe gehören, die entfernte Entität eine Vorrichtung als Master-Vorrichtung und die restlichen als Slave-Vorrichtungen auswählt; und
Empfangen einer mittels der entfernten Entität zurückgegebenen Synchronisationsanweisungsinformation, wobei die Synchronisationsanweisungsinformation verwendet wird, um die Master-Vorrichtung anzuweisen, eine Synchronisationsanweisung an die Slave-Vorrichtungen zu senden und die Slave-Geräte anzuweisen, eine Operation gemäß der Synchronisationsanweisung synchron durchzuführen; und
Empfangen mittels der Master-Vorrichtung gesendeter, synchron handzuhabender Inhalte,
Empfangen der Synchronisationsanweisung von der Master-Vorrichtung, wobei die Synchronisationsanweisung verwendet wird, um die synchrone Durchführung einer Operation an den synchron handzuhabenden Inhalten anzuweisen; und wobei
der Prozessor konfiguriert ist zum:
synchronen Durchführen einer Operation an den in Synchronisation handzuhabenden Inhalten gemäß der Synchronisationsanweisung.

## Revendications

1. Procédé pour effectuer une opération de manière synchrone sur un contenu, dans lequel le procédé comprend :
d'envoyer, par un terminal, une requête de synchronisation de contenu à une entité à distance, dans lequel l'entité à distance reçoit les requêtes de synchronisation de contenu d'un terminal ou de plusieurs terminaux, lorsque l'entité à distance détermine que des terminaux transmettant des requêtes de synchronisation de contenu appartiennent à un groupe, l'entité à distance sélectionne le terminal en tant que le terminal maître et le reste en tant que terminaux esclaves ;
de recevoir des informations d'instruction de synchronisation envoyées par l'entité à distance, les informations d'instruction de synchronisation étant utilisées pour instruire le terminal maître à envoyer une instruction de synchronisation aux terminaux esclaves et instruire les terminaux esclaves à exécuter de manière synchrone une opération selon l'instruction de synchronisation ;
de déterminer, par le terminal maître, du contenu à manipuler en synchronisation (S800) ;
d'envoyer, par le terminal maître, le contenu à manipuler en synchronisation aux terminaux esclaves selon les informations d'instruction de synchronisation, respectivement (S810) ; et
d'envoyer, par le terminal maître, l'instruction de synchronisation aux terminaux esclaves (S820), l'instruction de synchronisation étant utilisée pour instruire les terminaux esclaves à exécuter de manière synchrone une opération sur du contenu à manipuler en synchronisation.

2. Procédé selon la revendication 1, dans lequel la détermination, par le terminal maître, du contenu à manipuler en synchronisation comprend :
de recevoir, par le terminal maître, du contenu venant de l'entité à distance, et de déterminer, par le terminal maître, des parties ou la totalité du contenu actuellement reçu en tant que le contenu à manipuler en synchronisation, l'entité à distance étant un terminal de média en streaming ou un serveur de média en streaming.

3. Procédé selon la revendication 1, dans lequel le terminal maître détermine des parties ou la totalité de contenu stocké localement en tant que le contenu à manipuler en synchronisation.

4. Procédé selon l'une quelconque des revendications 2 à 3, comprenant en outre : avant d'envoyer, par le terminal maître, le contenu à manipuler en synchronisation au terminal esclave ou aux terminaux esclaves, respectivement, d'effectuer une authentification d'identité sur le terminal esclave ou les terminaux esclaves.

5. Procédé selon l'une quelconque des revendications 2 à 4, comprenant en outre :
de déterminer, par le terminal maître, un tableau de mise en correspondance pour le transfert ; et
d'envoyer, par le terminal maître, des parties ou une totalité du contenu à manipuler en synchronisation vers le terminal esclave ou les terminaux esclaves selon des informations d'identification du ou des terminaux esclaves enregistrées dans le tableau de mise en correspondance pour le transfert,
dans lequel le tableau de mise en correspondance pour le transfert est défini à l'avance ou défini en réponse à une requête venant du terminal esclave ou des terminaux esclaves.

6. Procédé selon l'une quelconque des revendications 2 à 4, comprenant en outre :
d'établir, par le terminal maître, un port de service ; et
d'envoyer, par le terminal maître, le contenu à manipuler en synchronisation venant du port de service vers le terminal esclave ou les terminaux esclaves, en réponse à une requête d'acquisition de contenu venant du terminal esclave ou des terminaux esclaves.

7. Procédé selon l'une quelconque des revendications 2 à 4, comprenant en outre :
de déclencher, par le terminal maître, l'instruction de synchronisation en réponse à une requête de synchronisation venant du terminal esclave ou des terminaux esclaves ; ou
de déclencher, par le terminal maître, l'instruction de synchronisation en envoyant une trame de synchronisation ou un identifiant de synchronisation vers le terminal esclave ou les terminaux esclaves.

8. Procédé pour effectuer une opération de manière synchrone sur un contenu, dans lequel le procédé comprend :
d'envoyer, par des terminaux esclaves, des requêtes de synchronisation de contenu à une entité à distance, dans lequel l'entité à distance reçoit des requêtes de synchronisation de contenu du terminal ou des terminaux, lorsque l'entité à distance détermine que des terminaux transmettant des requêtes de synchronisation de contenu appartiennent à un groupe, l'entité à distance sélectionne un terminal en tant qu'un terminal maître et le reste en tant que les terminaux esclaves ;
de recevoir, par des terminaux esclaves, des informations d'instruction de synchronisation renvoyées par l'entité à distance, les informations d'instruction de synchronisation étant utilisées pour instruire le terminal maître à envoyer une instruction de synchronisation aux terminaux esclaves et instruire les terminaux esclaves à exécuter de manière synchrone une opération selon l'instruction de synchronisation ;
de recevoir, par des terminaux esclaves, du contenu à manipuler en synchronisation venant du terminal maître,
de recevoir, par des terminaux esclaves, l'instruction de synchronisation venant du terminal maître (S1100), l'instruction de synchronisation étant utilisée pour instruire à exécuter de manière synchrone une opération sur du contenu à manipuler en synchronisation ; et
d'exécuter de manière synchrone, par des terminaux esclaves, une opération sur le contenu à manipuler en synchronisation selon l'instruction de synchronisation (S1110).

9. Dispositif maître pour effectuer une opération de manière synchrone sur un contenu, dans lequel le dispositif comprend :
un processeur (900 ; 1010) et un émetteur-récepteur (910 ; 1030),
l'émetteur-récepteur (910 ; 1030) étant configuré pour :
envoyer une requête de synchronisation de contenu à une entité à distance, dans lequel l'entité à distance reçoit les requêtes de synchronisation de contenu d'un ou de plusieurs dispositif(s), lorsque l'entité à distance détermine que des dispositifs transmettant des requêtes de synchronisation de contenu appartiennent à un groupe, l'entité à distance sélectionne le dispositif en tant que le dispositif maître et le reste en tant que dispositifs esclaves ;
recevoir des informations d'instruction de synchronisation envoyées par l'entité à distance, les informations d'instruction de synchronisation étant utilisées pour instruire le dispositif maître à envoyer une instruction de synchronisation aux dispositifs esclaves et instruire les dispositifs esclaves à exécuter de manière synchrone une opération selon l'instruction de synchronisation ; et
envoyer du contenu à manipuler en synchronisation aux dispositifs esclaves selon les informations d'instruction de synchronisation, respectivement (S810),
le processeur étant configuré pour :
déterminer le contenu à manipuler en synchronisation (S800) ; et
instruire l'émetteur-récepteur à envoyer une instruction de synchronisation aux dispositifs esclaves, l'instruction de synchronisation étant utilisée pour instruire les dispositifs esclaves à exécuter de manière synchrone une opération sur du contenu à manipuler en synchronisation.

10. Dispositif esclave pour effectuer une opération de manière synchrone sur un contenu, dans lequel le dispositif comprend :
un processeur (1210 ; 1300) et un émetteur-récepteur (1200 ; 1320),
l'émetteur-récepteur étant configuré pour :
envoyer une requête de synchronisation de contenu à une entité à distance, dans lequel l'entité à distance reçoit les requêtes de synchronisation de contenu venant d'un ou de plusieurs dispositif(s), lorsque l'entité à distance détermine que des dispositifs transmettant des requêtes de synchronisation de contenu appartiennent à un groupe, l'entité à distance sélectionne un dispositif en tant qu'un dispositif maître et le reste en tant que dispositifs esclaves ; et
recevoir des informations d'instruction de synchronisation renvoyées par l'entité à distance, les informations d'instruction de synchronisation étant utilisées pour instruire le dispositif maître à envoyer une instruction de synchronisation aux dispositifs esclaves et instruire les dispositifs esclaves à exécuter de manière synchrone une opération selon l'instruction de synchronisation ; et
recevoir du contenu à manipuler en synchronisation envoyé par le dispositif maître,
recevoir l'instruction de synchronisation du dispositif maître, l'instruction de synchronisation étant utilisée pour instruire à exécuter de manière synchrone une opération sur du contenu à manipuler en synchronisation ; et
le processeur étant configuré pour :
exécuter de manière synchrone une opération sur du contenu à manipuler en synchronisation selon l'instruction de synchronisation.
